(19) Europäisches Patentamt
European Patent Office
Office européen des brevets

(11) **EP 3 144 166 B1**

(12) **EUROPEAN PATENT SPECIFICATION**

(45) Date of publication and mention
of the grant of the patent:
**17.07.2019 Bulletin 2019/29**

(51) Int Cl.:
***B60H 1/00*** *(2006.01)*

(21) Application number: **16182526.0**

(22) Date of filing: **03.08.2016**

(54) **HVAC MODULE WITH ANTI-BACKFLOW CONTROL AND METHOD OF OPERATION**

KLIMAANLAGE-MODUL MIT GEGENRÜCKFLUSSSTEUERUNG UND VERFAHREN ZUM BETRIEB

MODULE DE CHAUFFAGE, VENTILATION ET CLIMATISATION AVEC COMMANDE ANTI-RETOUR ET PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2015 US 201514854829**

(43) Date of publication of application:
**22.03.2017 Bulletin 2017/12**

(73) Proprietor: **Mahle International GmbH 70376 Stuttgart (DE)**

(72) Inventors:
• **Kadle, Prasad Shripad
Williamsville, NY 14221 (US)**
• **Kinmartin, Jeffrey Charles
East Amherst, NY 14051 (US)**
• **Liu, Wen
Pendleton, NY 14094 (US)**
• **Wang, Mingyu
Amherst, NY 14501 (US)**
• **Xia, Yanping
Williamsville, NY 14221 (US)**

(74) Representative: **BRP Renaud & Partner mbB Rechtsanwälte Patentanwälte Steuerberater
Königstraße 28
70173 Stuttgart (DE)**

(56) References cited:
EP-A1- 1 466 764        EP-A2- 2 030 816
WO-A1-2017/001215       WO-A1-2017/009055
DE-T5-112014 000 301    US-A- 4 974 776
US-A1- 2013 014 931

**Description**

The present application relates to a heating, ventilation, and air conditioning (HVAC) module for a passenger vehicle.

**BACKGROUND OF THE INVENTION**

Traditional motor vehicles typically have a single temperature-controlled zone air conditioning system designed to provide conditioned air to the front occupants in the passenger compartment of the vehicle. As the size of the vehicles increases, and as vehicle occupants demand more luxurious features, air conditioning systems capable of providing multiple temperature-controlled zones, or multi-zone air conditioning systems, have become more prevalent. A multi-zone air conditioning system allows the driver, front passenger, and even the rear seat passengers to have separate controls of the temperature in their respective zone, thereby improving the comfort of the occupants in each zone. A larger size vehicle, such as sport utility vehicles (SUV) and mini-vans, may have up to four or more individual zones in the passenger compartment. As an example, the passenger compartment of a mini-van may be divided into four separate zones, where the driver space may be zone 1, the front passenger space may be zone 2, the second row seating space may be zone 3, and the third row seating space may be zone 4.

Traditional heating, ventilation and air conditioning (HVAC) modules for single zone air conditioning systems are generally designed to optimally utilize the amount of available space in a given type of vehicle as well as to conform to the shape of that space. HVAC modules that have the capability of providing temperature control for multiple zones are specifically designed, tooled, and manufactured for the exact number of zones. The production volume for multiple zone HVAC modules is typically much lower than that for single or dual zone modules. As such, it is much more expensive to design such a multiple zone HVAC module for so few vehicles. Additionally, it would be disruptive to the manufacturing cell and the manufacturing process in general to be forced to build an entirely different HVAC module to achieve an additional temperature-controlled zone.

Traditional multiple zone HVAC modules use partition walls extending up to the individual heat exchangers within the HVAC module to provide multiple streams of conditioned airflow. These multiple streams of airflow are used to achieve multi-zone climate control in the associated passenger compartments. The greater the number of zones, the greater number of partition walls are required, and the larger the sizes of heat exchangers are required. However, multiple zone HVAC modules must conform to the limited size and shape where a single zone HVAC module would be in place, thereby requiring additional functions to be added without utilizing any extra space. Due to operating capacity and packaging constraints, two separate dual HVAC modules are commonly employed in larger vehicles to achieve multi-zone operation, where a two zone module is installed between the firewall and the vehicle dash and another, one or two zone, HVAC module in the area of the trunk.

However, implementation of traditional, partitioned, dual HVAC modules is challenging. For example, dual HVAC modules can require excessive packaging space in the host vehicle, additional air ducts, additional lines and fittings, additional refrigerant, additional coolant, additional mass, higher operating noise levels, higher cost and increased system complexity that often translates into elevated quality and warranty issues. Such systems require additional energy and larger supporting components such as compressors, water pump, condenser, alternator, line sets, and ducts. As a consequence, the dual module approach results in increased vehicle fuel consumption and increased exhaust emissions. All of these items significantly contribute to overall vehicle cost and operating costs.

EP 1 466 764 A1 discloses a method of controlling the air discharge temperature of an HVAC module. The known HVAC module having an air inlet, an evaporator downstream of the air inlet, a cold air chamber downstream of the evaporator, a heater downstream of the cold air chamber, a hot air chamber downstream of the heater, a rear zone mixing chamber downstream of the cold air chamber and the hot air chamber, a front zone air outlet, a rear zone air outlet, and a blend valve disposed in the rear zone mixing chamber. The known method comprising the steps of:

reading a temperature of the cold air chamber, and a temperature of the hot air chamber;
setting a discharge airflow rate target and a discharge temperature target for the rear zone air outlet;
calculating a resistance of the blend valve;
determining a position of the blend valve corresponding to the calculated resistance of the blend valve, the determination based on pre-programed blend valve calibration data; and
moving the blend valve (224b) to the position of the blend valve (224b) determined to correspond to the resistance of the blend valve (224b) calculated.

DE 11 2014 000 301 T5 discloses an HVAC module having a control valve disposed between the cold air chamber and the rear mixing chamber.

EP 2 030 816 A2 discloses an HVAC module comprising valves configured as butterfly valves.

WO 2017/009055 A1 and WO 2017/001215 A1 disclose HVAC modules each having a cold air stream path for guiding cold air from the cold air chamber to the rear mixing chamber, and a blend valve arranged at the entrance of said cold air stream path and configured to guide cold air from said cold air chamber through the cold air stream path and/or through the heater.

## SUMMARY OF THE INVENTION

The present invention provides an open architecture, multi-zone heating, ventilation, and air conditioning (HVAC) module for a passenger vehicle, having an anti-backflow control and a method for operating the anti-backflow control.

According to the present invention, an apparatus is provided for an HVAC module for a passenger vehicle comprising a housing defining an air inlet, a front zone air outlet, and a rear zone air outlet; an evaporator disposed within the housing downstream of the air inlet; a heater disposed within the housing downstream of the evaporator; a cold air chamber downstream of the evaporator defined in the housing between the evaporator and the heater, the cold air chamber having a first pressure; a hot air chamber downstream of the heater defined in the housing between the heater and a first interior surface of the housing, the hot air chamber having a second pressure quantitatively lower than the first pressure of the cold air chamber; a cold air stream path defined by a second interior surface of the housing and an interior partition in the housing, the cold air stream path extending from the cold air chamber to a rear zone mixing chamber defined by the housing, the rear zone mixing chamber having a third pressure and being in fluid communication with the rear zone air outlet; and a control valve disposed in the housing between the cold air chamber and the rear zone mixing chamber, the control valve configured to controllably release cold air from the cold air chamber along the cold air stream path into the rear zone mixing chamber, wherein the control valve throttles cold air from the cold air chamber thereby regulating the third pressure of the rear zone mixing chamber such that the third pressure remains quantitatively lower than the second pressure of the hot air chamber. This prevents cold air in the cold air stream path from flowing back into the hot air chamber.

The rear zone mixing chamber has a rear zone blend valve disposed within the rear zone mixing chamber. The rear zone blend valve is configured to selectively direct air flow from the cold air stream and the hot air chamber to the rear air outlet.

The control valve disposed in the housing between the cold air chamber and the rear zone mixing chamber may be a butterfly valve.

The HVAC module may further comprising a front zone mixing chamber defined by the housing and positioned downstream of the evaporator adjacent to the cold air chamber and the hot air chamber. The front zone mixing chamber may be in fluid communication with the front zone air outlet.

A front zone blend valve may be disposed in the front zone mixing chamber to selectively direct air flow from the cold air chamber and the hot air chamber to the front zone air outlet.

This structure may be applied to an HVAC module having no more than one blower assembly that moves air through the housing from the inlet to the front zone air outlet and/or the rear zone air outlet.

According to the present invention, a method of controlling a backflow of cold air into hot air chamber in an open architecture HVAC module is provided. The HVAC module having an air inlet, an evaporator downstream of the air inlet, a cold air chamber downstream of the evaporator, a heater downstream of the cold air chamber, a hot air chamber downstream of the heater, a rear zone mixing chamber downstream of the cold air chamber and the hot air chamber, a front zone air outlet, a rear zone air outlet, a control valve disposed between the cold air chamber and the rear mixing chamber, and a blend valve disposed in the rear zone mixing chamber.

According to the method of claim 9 the method comprises the steps of reading a pressure of the cold air chamber, a temperature of the cold air chamber via a thermistor measurement, a pressure of the hot air chamber, and a temperature of the hot air chamber; setting a discharge air flow rate target and a discharge temperature target for the rear zone air outlet; calculating a resistance of the anti-backflow control valve; calculating a resistance of the blend valve; determining a position of the anti-backflow control valve corresponding to the calculated resistance of the control valve, the determination based on pre-programed control valve calibration data; determining a position of the blend valve corresponding to the calculated resistance of the blend valve, the determination based on pre-programed blend valve calibration data; moving the control valve to the position of the control valve determined to correspond to the resistance of the control valve calculated; moving the blend valve to the position of the blend valve determined to correspond to the resistance of the blend valve calculated.

According to the alternative method of claim 10 the method comprises the steps of reading the position of the control valve, and the position of the blend valve, determining the resistance of the control valve based on pre-programed control valve calibration data which are looked up from pre-calibrated tables, determining the resistance of the rear zone blend valve based on pre-programed blend valve calibration data which are looked up from pre-calibrated tables, calculating a discharge air flow rate at the rear zone air outlet, calculating a discharge temperature at the rear zone air outlet, comparing the calculated discharge air flow rate and the discharge temperature to a pre-set discharge air flow rate target and a pre-set discharge temperature target, and moving at least one of the control valve and rear zone blend valve.

The pre-programed control valve calibration data may be a control valve look-up table. The pre-programed blend valve calibration data may be a blend valve look-up table. The method may be applied to an HVAC module having no more than one blower assembly configured to induce air to flow through the housing from the inlet to at least one of the front zone air outlets and/ or the rear zone air outlets.

According to the invention the HVAC module is configured to perform one of the aforementioned methods for controlling a backflow of cold air into hot air chamber, in such a way that said method is performed completely, or at least partially, automatically by the HVAC module. To this end the HVAC module is provided with a respective control device which is coupled to all necessary controllable elements of the HVAC module and which is configured and/or programmed to perform said method, when the HVAC module is in operation.

These and other features and advantages of this invention will become apparent upon reading the following specification, which, along with the drawings, describes preferred and alternative embodiments of the invention in detail.

## BRIEF DESCRIPTION OF THE DRAWINGS

This invention will be further described, by way of example, with reference to the accompanying drawings in which:

Fig. 1, illustrates a cross-sectional view of an open architecture HVAC module having an anti-backflow control valve;
Fig. 2, is a flowchart illustrating a method for preventing back flow of air in the HVAC module of Fig. 1 by controlling an anti-backflow control valve and a blend valve; and
Fig. 3, is a schematic illustrating valves controlled by the method of Fig. 2.

Although the drawings represent embodiments of the present invention, the drawings are not necessarily to scale and certain features may be exaggerated in order to illustrate and explain the present invention. The exemplification set forth herein illustrates an embodiment of the invention, in one form, and such exemplifications are not to be construed as limiting the scope of the invention as defined in the appended claims.

## DETAILED DESCRIPTION OF INVENTION

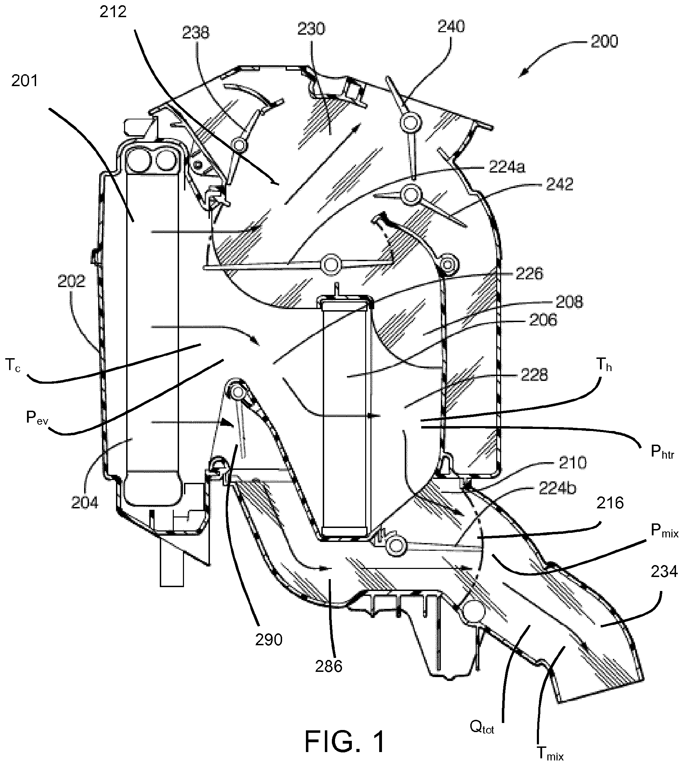

Shown in Fig. 1 is one form of an HVAC module 200 having an anti-backflow control valve 290 of the present invention. Where practical, reference numbers for like components are commonly used among the figures. Referring to Fig. 1, the present embodiment according ot the invention pertains to an open architecture HVAC module 200. An open architecture HVAC module means, in part, that the cores of the heat exchangers 204, 206 are not partitioned into dedicated zones by the internal partition walls 208, 210 of the HVAC housing 202, and all or a portion of the air flow through the core of each heat exchanger 204, 206 may be intercepted by blend valves 224a, 224b, and directed to any one or more zones. In other words, the total core of each heat exchanger 204, 206, as opposed to only a portion of the core of the each heat exchanger 204, 206, can be utilized to condition the air flow to one or more of the zones at all times. Unlike the prior art HVAC modules, an open architecture HVAC module 200 enables super cooling or super heating of any one zone, or enables the delivery of different temperature air to multiple zones. Super cooling or super heating is accomplished by directing the total mass air flow (100% of air-flow) exiting the core of the evaporator 204 or heater unit 206 to any one of the multiple zones.

The improved HVAC module 200 includes an HVAC housing 202 containing an evaporator 204 and the heater unit 206 spaced from and downstream from the evaporator 204. A cold air chamber 226 is defined in the HVAC housing 202 between the evaporator 204 and heater unit 206, and a hot air chamber 228 is defined between the heater unit 206 and an interior surface of the HVAC housing 202 downstream of the heater unit 206. Air flow through the evaporator 204 exits directly into the cold air chamber 226 and air flow through the heater unit 206 exits directly into the hot air chamber 228. The HVAC housing 202 defines an air inlet 201 and four air outlets 230, 232, 234, 236; one air outlet for each of the temperature controlled zones for supplying temperature controlled air to the respective zones. In Fig. 1, the HVAC blower unit and its connection to the air inlet 201 are on the back side of the HVAC housing 202, and therefore are not shown. Fig. 1 also does not show two of the air outlets 232 and 236, but it will be understood that those air outlets 232 and 236 are directly reflected on the back side of the HVAC module 200 and are hidden behind the upper partition wall 208 and the lower partition wall 210, respectively. Two of the air outlets 230, 232 for directing conditioned air to a front zone of a vehicle, two of the air outlets 234, 236 for directing conditioned air to a rear zone of the vehicle.

The upper vertical partition wall 208, or first partition wall 208, may extend partially into the cold and hot air chambers 226, 228 from an interior surface of the HVAC housing 202 between the first outlet 230 and second outlet 232. The upper portion of the HVAC housing 202 defines a front zone mixing chamber 212 in fluid communication with the front zone air outlets 230, 232. Similarly, the lower vertical partition wall 210, or second partition wall 210, may extend partially into the cold and hot air chambers 226, 228 from an interior surface of the HVAC housing 202 between the third outlet 234 and fourth outlet 236. The lower portion of the HVAC housing defines a rear zone mixing chamber 216 in fluid communication with the rear zone air outlets 234, 236. In Fig. 1, the front zone outlets 230, 232 are adjacent the upper portion of the HVAC housing 202, and the rear zone outlets 234, 236 are adjacent the lower portion of the HVAC housing 202

It should be noted that the improved HVAC module 200 does not include a horizontal partition wall. It should also be noted that the vertical partition walls 208, 210, if included extend only partially into the cold and hot air chambers 226, 228, and do not extend to or through the evaporator 204 and heater unit 206. Each of the mixing chambers 212, 216 is in fluid communication with both the cold air chamber 226 and hot air chamber 228. Disposed in each of the mixing chambers 212, 216, is a blend valve 224a, 224b configured to selectively divert at least a portion of air flow from the cold air chamber 226 and hot air chamber 228 to its respective air outlet 230, 232, 234, 236. It will be understood that the half of the HVAC module 200 shown in Fig. 1 is directly reflected on the back side of the HVAC module 200 behind the upper vertical partition wall 208 and lower vertical partition wall 210. Therefore there are mixing chambers and blend valves on both halves of the HVAC module 200. Only a single blower (not shown) is required to induce air through the improved HVAC module 200 to the multiple zones.

A first mode valve 238 for delivering air to the windshield, a second mode valve 240 for delivering air to the dash, and a third mode valve 242 for delivering air to the feet of the driver are shown downstream of the front zone mixing chamber 212. Downstream of the rear zone mixing chamber 216 may be mode valves (not shown) for delivering air flow to the torso or feet of the rear passengers.

The evaporator 204 is spaced from and disposed upstream of the heater unit 206 within the HVAC housing 202. The cold air chamber 226 is defined by the volume of the HVAC housing 202 between the evaporator 204 and the heater unit 206, and the hot air chamber 228 is defined by the volume of the HVAC housing 202 between the heater unit 206 and a portion of the interior surface of the HVAC housing 202 downstream of the heater unit 206.

A cold air stream path 286 is defined by a portion of the housing 202 and an interior partition in the housing. The cold air stream path 286 extends from the cold air chamber 226 to the rear zone mixing chamber 216. The cold air stream path 286 is the path that cold air takes to move from the cold air chamber 226 to the rear zone mixing chamber 216.

As mentioned, a single blower assembly is provided to draw air into the HVAC module 200 to be conditioned and conveyed to the individual zones. The mass flow rate and velocity of air flow to each zone may be controlled by the combination of the speed of the blower and airflow control valves provided in the vent outlet to each of the zones. The blower assembly may draw in a stream of air external to the vehicle or a stream of recycle air from within the vehicle.

The temperature blend valves 224a, 224b of each mixing chamber may selectively intercept one of the hot and cold air streams, or a combination of both, from the cold and hot air chambers 226, 228, respectively, to provide the desired temperature to the zones. The zonal specific airflow rate after mixing is controlled by a coordination of the blower, of the respective current mode valve position, and the balancing of other zonal mode valves 238, 240, 242. A benefit of this open architecture is that the total capacity of the evaporator 204 and heater unit 206 may be utilized to condition the air for any one of the zones, as well as providing variable air flow to the zones. Another benefit is that by selectively opening and closing the airflow control valves, the total air flow through the heat exchangers 204, 206 may be directed to any one of the zones. The mode valves 238, 240, 242 may be coordinated to direct up to 100 percent of the zone one air flow to one of the defrost vents, passenger vents, or floor outlets.

The cold air chamber 226 has a pressure $P_{ev}$ and a temperature $T_c$. The hot air chamber 228 has a pressure $P_{htr}$ and a temperature $T_h$. The rear zone mixing chamber has a pressure $P_{mix}$. For the purpose of the present disclosure, the rear zone air outlet 234 has a target discharge air flow rate $Q_{tot}$ and target discharge temperature $T_{mix}$. As a general rule, the pressure $P_{ev}$ of the cold air chamber 226 is always quantitatively greater than the pressure $P_{htr}$ of the hot air chamber 228 due to the added resistance of passing through the heater 206.

It has been discovered that in certain limited circumstances, cold air from the cold air stream path 286 reaches the rear zone mixing chamber 216 and flows back into hot air chamber 228. This occurs when the rear zone blend valve 224b is in a position to provide nearly all cold air to the rear zone air outlet 234 and the front zone blend valve 224a is in a position to provide nearly all hot air to the front zone air outlets, with the front zones demanding high airflow rates. This position of the rear zone blend valve 224b places little resistance on the cold air stream, thereby increasing the pressure $P_{mix}$ in the rear zone mixing chamber 216, while such a position of the front zone blend valve 224a and the required high flow rates causes the pressure $P_{htr}$ to decrease. When $P_{mix}$ increases to become closer to $P_{ev}$ and $P_{htr}$ decreases, $P_{mix}$ becomes quantitatively greater than $P_{htr}$. In this situation, cold air from the cold air stream path 286 reaches the rear zone mixing chamber 216 and then flows back toward to the hot air chamber 228. This cold air mixes with the hot air in the hot air chamber 228, thereby cooling the air in the hot air chamber 228 and reducing the temperature of the air flowing to the front zone air outlets.

It is thus desirable to reduce or prevent the backflow from the cold air stream path 286 to the hot air chamber 228. Utilizing an anti-backflow control valve 290 between the cold air chamber 226 and the rear zone mixing chamber 216 to control the release of cold air from the cold air chamber 226 regulates the pressures of the HVAC module by creating a pressure drop in the cold air stream path 286. Thus, the anti-backflow valve 290 helps to maintain the pressure $P_{mix}$ of the rear zone mixing chamber such that it is quantitatively less than the pressure $P_{htr}$ of the hot air chamber 228. The anti-backflow valve 290 increases the resistance on the cold air along the cold air stream path 286 by throttling air from the cold air chamber 226, thereby decreasing the pressure of the cold air as it moves to the rear zone mixing chamber 216. The anti-backflow control valve 290 may act independently of the fluid communication of the hot air chamber to the rear zone mixing chamber such that the control valve 290 does not affect the cross section of the fluid communication between the hot air chamber 228 and the rear zone mixing chamber 216. Where the mixing valve is controllable by the HVAC system itself, it may be feasible to replace the rear zone blend valve 224b with two separately operable valves, of which one is dedicated to the cold air stream path 286 and the other one to the hot air exiting the hot air chamber 228. The separate anti-backflow control valve 290 in addition to the rear zone blend valve 224b as shown in Fig. 1, however, is suited for all arrangements, including those, in which the rear zone blend valve 224b is externally controlled and inaccessible to the HVAC control.

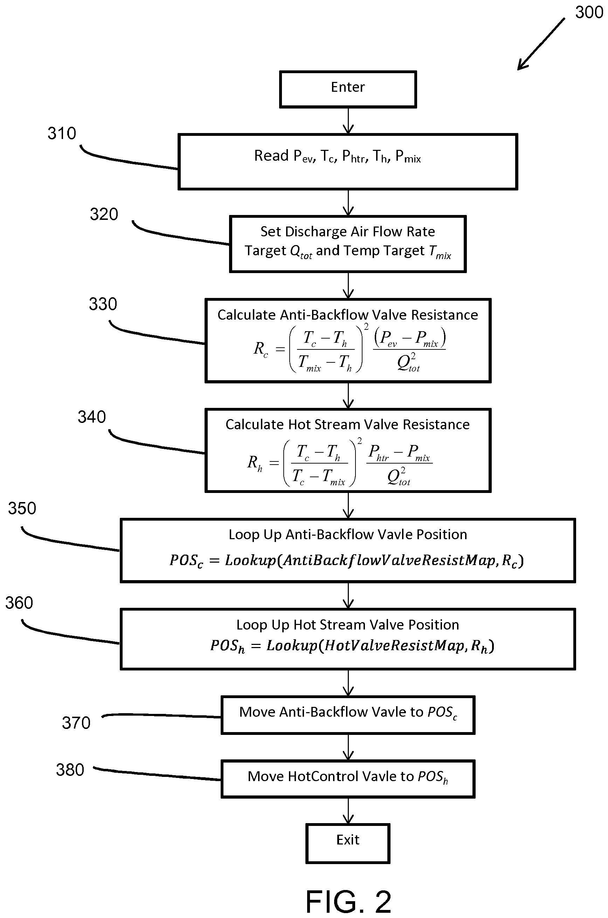

Fig. 2 illustrates a method for operating 300 an anti-backflow control valve 290 of an open architecture HVAC module as shown in Fig. 1. The method begins by reading a pressure of the cold air chamber $P_{ev}$, a temperature of the cold air chamber $T_c$, a pressure of the hot air chamber $P_{htr}$, a temperature of the hot air chamber $T_h$, and a pressure of the rear zone mixing chamber $P_{mix}$ at step 310. Next, a discharge air flow rate target $Q_{tot}$ and a discharge temperature target $T_{mix}$ are set for the rear zone air outlet at step 320. The method continues by calculating a resistance $R_c$ of the anti-backflow control valve at step 330 and calculating a resistance $R_h$ of the rear zone blend valve at step 340. The resistance $R_c$ of the anti-backflow control valve is calculated by Equation 1, while the resistance $R_h$ of the rear zone blend valve is calculated by Equation 2.

$$\text{Equation 1:} \quad R_c = \left(\frac{T_c - T_h}{T_{mix} - T_h}\right)^2 \frac{P_{ev} - P_{mix}}{Q_{tot}^2}$$

$$\text{Equation 2:} \quad R_h = \left(\frac{T_c - T_h}{T_c - T_{mix}}\right)^2 \frac{P_{htr} - P_{mix}}{Q_{tot}^2}$$

Alternatively, starting with an initial control valve position and a blend valve position, the resistance of the control valve $R_c$ and the resistance of the rear zone blend valve $R_h$ can be looked up from the pre-calibrated tables. The discharge air flow rate $Q_{out}$ and a discharge temperature $T_{out}$ are calculated according to Equation 3 and Equation 4, respectively, and are compared with the pre-set discharge temperature target $T_{mix}$ and pre-set discharge air flow rate target $Q_{tot}$ to re-position the valves via a method proportional-integral-derivative (PID) control.

$$\text{Equation 3:} \quad Q_{out} = \left(\frac{P_{htr} - P_{mix}}{R_h}\right)^{\frac{1}{2}} + \left(\frac{P_{ev} - P_{mix}}{R_c}\right)^{\frac{1}{2}}$$

$$\text{Equation 4:} \quad T_{out} = \left(\frac{P_{ev} - P_c}{R_c}\right)^{\frac{1}{2}} \frac{T_c}{Q_{out}} + \left(\frac{P_{htr} - P_c}{R_h}\right)^{\frac{1}{2}} \frac{T_h}{Q_{out}}$$

The method continues at step 350 by determining a position of the control valve $POS_c$ corresponding to the calculated resistance of the control valve $R_c$. The determination is based on referencing pre-programed control valve calibration data. The pre-programmed control valve calibration data may be in the form of a look-up table, as shown in Table 1.

Table 1.

| Control Valve Position | $Pos_c$ (0) | $Pos_c$ (1) | $Pos_c$ (2) | $Pos_c$ (3) | $Pos_c$ (4) | $Pos_c$ (5) | $Pos_c$ (6) | $Pos_c$ (7) | $Pos_c$ (8) | $Pos_c$ (9) | $Pos_c$ (10) |
|---|---|---|---|---|---|---|---|---|---|---|---|

(continued)

| Control Valve Resistance | $R_c$ (0) | $R_c$ (1) | $R_c$ (2) | $R_c$ (3) | $R_c$ (4) | $R_c$ (5) | $R_c$ (6) | $R_c$ (7) | $R_c$ (8) | $R_c$ (9) | $R_c$ (10) |
|---|---|---|---|---|---|---|---|---|---|---|---|

The method continues at step 360 by determining a position of the rear zone blend valve $POS_h$ corresponding to the calculated resistance of the rear zone blend valve $R_h$. The determination is based on referencing pre-programed control valve calibration data. The pre-programmed rear zone blend valve calibration data may be in the form of a look-up table, as shown in Table 2.

Table 2.

| Rear Zone Blend Valve Position | $Pos_h$ (0) | $Pos_h$ (1) | $Pos_h$ (2) | $Pos_h$ (3) | $Pos_h$ (4) | $Pos_h$ (5) | $Pos_h$ (6) | $Pos_h$ (7) | $Pos_h$ (8) | $Pos_h$ (9) | $Pos_h$ (10) |
|---|---|---|---|---|---|---|---|---|---|---|---|
| Rear Zone Blend Valve Resistance | $R_h$ (0) | $R_h$ (1) | $R_h$ (2) | $R_h$ (3) | $R_h$ (4) | $R_h$ (5) | $R_h$ (6) | $R_h$ (7) | $R_h$ (8) | $R_h$ (9) | $R_h$ (10) |

At step 370, the method includes moving the control valve to the position of the control valve $POS_c$ determined to correspond to the resistance of the control valve $R_c$ calculated. Step 380 includes moving the rear zone blend valve to the position of the rear zone blend valve $POS_h$ determined to correspond to the resistance of the blend valve $R_h$ calculated.

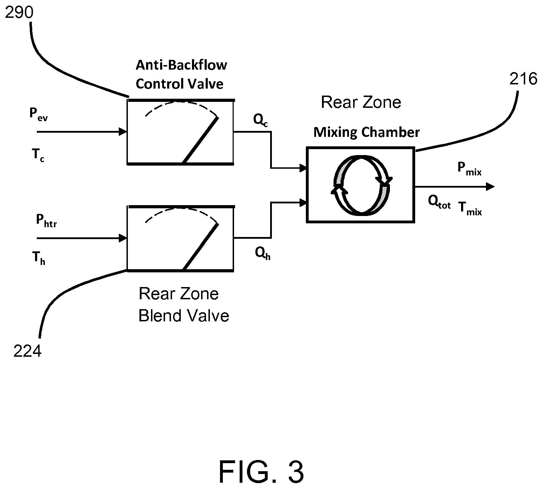

Fig. 3 is a schematic illustrating valves controlled by the method of Fig. 2. Based on the pressure of the cold air chamber $P_{ev}$ and the temperature of the cold air chamber $T_c$, the anti-backflow control valve 290 is positioned to result in a cold air flow $Q_c$. The rear zone blend valve is 224b is positioned based on the pressure of the hot air chamber $P_{htr}$ and the temperature of the hot air chamber $T_h$, and results in a hot air flow $Q_h$. The cold air flow $Q_c$ and the hot air flow $Q_h$ mix in the rear mixing chamber 216 to result in a rear zone mixing chamber pressure $P_{mix}$ and a discharge air flow rate target $Q_{tot}$ and discharge temperature target $T_{mix}$.

It is to be understood that the invention has been described with reference to specific embodiments and variations to provide the features and advantages previously described and that the embodiments are susceptible of modification as will be apparent to those skilled in the art.

**Claims**

1. An HVAC module (200), comprising:

   a housing (202) defining an air inlet (201), a front zone air outlet (230), and a rear zone air outlet (234);
   an evaporator (204) disposed within the housing (202) downstream of the air inlet (201);
   a heater (206) disposed within the housing (202) downstream of the evaporator (204);
   a cold air chamber (226) downstream of the evaporator (204) defined in the housing (202) between the evaporator (204) and the heater (206), the cold air chamber (226) having a first pressure ($P_{ev}$);
   a hot air chamber (228) downstream of the heater (206) defined in the housing (202) between the heater (206) and a first interior surface of the housing (202), the hot air chamber (228) having a second pressure ($P_{htr}$) quantitatively lower than the first pressure ($P_{ev}$) of the cold air chamber (226), the hot air chamber (228) being in fluid communication with a rear zone mixing chamber (216) defined by the housing (202), the rear zone mixing chamber (216) having a third pressure ($P_{mix}$) and being in fluid communication with the rear zone air outlet (234);
   a blend valve (224b) disposed in the rear zone mixing chamber (216);
   a cold air stream path (286) defined by a second interior surface of the housing (202) and an interior partition in the housing (202), the cold air stream path (286) extending from the cold air chamber (226) to the rear zone mixing chamber (216); and
   a control valve (290) disposed in the housing (202) between the cold air chamber (226) and the rear zone mixing camber (216), the control valve (290) configured to selectively control a release of cold air from the cold air chamber (226) along the cold air stream path (286) into the rear zone mixing chamber (216) so as to control backflow of cold air into the hot air chamber (228);

wherein the blend valve is a rear zone blend valve (224b) disposed at an entrance of the rear zone mixing chamber (216), wherein the rear zone blend valve (224b) is configured to selectively direct air flow from the cold air stream and the hot air chamber (228) to the rear zone air outlet (234); **characterized in that** the module (200) further comprises a control device configured and/or programmed to perform a method of controlling a backflow of cold air into the hot air chamber (228) according to any one of claims 9 to 13.

2. The HVAC module of claim 1, wherein the control valve (290) throttles cold air from the cold air chamber (226) thereby regulating the third pressure ($P_{mix}$) of the rear zone mixing chamber (216) such that the third pressure ($P_{mix}$) remains quantitatively lower than the second pressure ($P_{htr}$) of the hot air chamber (228).

3. The HVAC module of claim 2, wherein the control valve (290) acts independently of the fluid communication of the hot air chamber (228) to the rear zone mixing chamber (216), such that the control valve (290) does not affect the cross section of the fluid communication between the hot air chamber (228) and the rear zone mixing chamber (216).

4. The HVAC module of any one of claims 1 to 3, wherein the control valve (290) disposed in the housing (202) between the cold air chamber (226) and the rear zone mixing chamber (216) is a butterfly valve.

5. The HVAC module of any one of claims 1 to 4, wherein the control valve (290) disposed in the housing (202) between the cold air chamber (226) and the rear zone mixing chamber (216) is a flap valve.

6. The HVAC module of any one of claims 1 to 5, further comprising a front zone mixing chamber (212) defined by the housing (202) and positioned downstream of the evaporator (204) adjacent to the cold air chamber (226) and the hot air chamber (228), the front zone mixing chamber (212) being in fluid communication with the front zone air outlet (230).

7. The HVAC module of claim 6, further comprising a front zone blend valve (224a) disposed in the front zone mixing chamber (212), wherein the front zone blend valve (224a) is configured to selectively direct air flow from the cold air chamber (226) and the hot air chamber (228) to the front zone air outlet (230).

8. The HVAC module of any one of claims 1 to 7, further comprising no more than one blower assembly configured to induce air to flow through the housing (202) from the air inlet (201) to at least one of the front zone air outlet (230) and the rear zone air (234) outlet.

9. A method of controlling a backflow of cold air into a hot air chamber (228) in an open architecture HVAC module (200) having an air inlet (201), an evaporator (204) downstream of the air inlet (201), a cold air chamber (226) downstream of the evaporator (204), a heater (206) downstream of the cold air chamber (226), said hot air chamber (228) downstream of the heater (206), a rear zone mixing chamber (216) downstream of the cold air chamber (226) and the hot air chamber (228), a front zone air outlet (230), a rear zone air outlet (234), a cold air stream path (286) for guiding cold air from the cold air chamber (226) to the rear zone mixing chamber (216), a control valve (290) disposed between the cold air chamber (226) and the rear zone mixing chamber (216), and a blend valve (224b) disposed in the rear zone mixing chamber (216), wherein said control valve (290) is configured to control the release of cold air from the cold air chamber (226) along the cold air stream path (286) into the rear mixing chamber (216), and wherein said blend valve is a rear zone blend valve (224b) disposed at an entrance of the rear zone mixing chamber (216), wherein the rear zone blend valve (224b) is configured to selectively direct air flow from the cold air stream and the hot air chamber (228) to the rear zone air outlet (234), the method comprising the steps of:

reading a pressure ($P_{ev}$) of the cold air chamber (226), a temperature ($T_c$) of the cold air chamber (226), a pressure ($P_{htr}$) of the hot air chamber (228), a temperature ($T_h$) of the hot air chamber (228), and a pressure ($P_{mix}$) of the rear zone mixing chamber (216);
setting a discharge air flow rate target ($Q_{tot}$) and a discharge temperature target ($T_{mix}$) for the rear zone air outlet (234);
calculating a resistance ($R_c$) of the control valve (290) according to the following equation:

$$R_c = \left(\frac{T_c - T_h}{T_{mix} - T_h}\right)^2 \frac{P_{ev} - P_{mix}}{Q_{tot}^2}$$

calculating a resistance ($R_h$) of the blend valve (224b) according to the following equation:

$$R_h = \left(\frac{T_c - T_h}{T_c - T_{mix}}\right)^2 \frac{P_{htr} - P_{mix}}{Q_{tot}^2}$$

determining a position of the control valve (290) corresponding to the calculated resistance of the control valve (290), the determination based on pre-programed control valve calibration data;
determining a position of the blend valve (224b) corresponding to the calculated resistance of the blend valve (224b), the determination based on pre-programed blend valve calibration data;
moving the control valve (290) to the position of the control valve (290) determined to correspond to the resistance of the control valve (290) calculated; and
moving the blend valve (224b) to the position of the blend valve (224b) determined to correspond to the resistance of the blend valve (224b) calculated.

10. A method of controlling a backflow of cold air into a hot air chamber (228) in an open architecture HVAC module (200) having an air inlet (201), an evaporator (204) downstream of the air inlet (201), a cold air chamber (226) downstream of the evaporator (204), a heater (206) downstream of the cold air chamber (226), said hot air chamber (228) downstream of the heater (206), a rear zone mixing chamber (216) downstream of the cold air chamber (226) and the hot air chamber (228), a front zone air outlet (230), a rear zone air outlet (234), a cold air stream path (286) for guiding cold air from the cold air chamber (226) to the rear zone mixing chamber (216), a control valve (290) disposed between the cold air chamber (226) and the rear zone mixing chamber (216), and a blend valve (224b) disposed in the rear zone mixing chamber (216), wherein said control valve (290) is configured to control the release of cold air from the cold air chamber (226) along the cold air stream path (286) into the rear mixing chamber (216), and wherein said blend valve is a rear zone blend valve (224b) disposed at an entrance of the rear zone mixing chamber (216), wherein the rear zone blend valve (224b) is configured to selectively direct air flow from the cold air stream and the hot air chamber (228) to the rear zone air outlet (234), the method comprising the steps of:

reading the position of the control valve (290), and the position of the blend valve (224b),
determining the resistance ($R_c$) of the control valve (290) based on pre-programed control valve calibration data which are looked up from pre-calibrated tables,
determining the resistance ($R_h$) of the rear zone blend valve (224b) based on pre-programed blend valve calibration data which are looked up from pre-calibrated tables,
calculating a discharge air flow rate ($Q_{out}$) at the rear zone air outlet (234) according to the following equation:

$$Q_{out} = \left(\frac{P_{htr} - P_{mix}}{R_h}\right)^{\frac{1}{2}} + \left(\frac{P_{ev} - P_{mix}}{R_c}\right)^{\frac{1}{2}}$$

calculating a discharge temperature ($T_{out}$) at the rear zone air outlet (234) according to the following equation:

$$T_{out} = \left(\frac{P_{ev} - P_c}{R_c}\right)^{\frac{1}{2}} \frac{T_c}{Q_{out}} + \left(\frac{P_{htr} - P_c}{R_h}\right)^{\frac{1}{2}} \frac{T_h}{Q_{out}}$$

comparing the calculated discharge air flow rate ($Q_{out}$) and the discharge temperature ($T_{out}$) to a pre-set discharge air flow rate target ($Q_{tot}$) and a pre-set discharge temperature target ($T_{mix}$), and moving at least one of the control valve (290) and rear zone blend valve (224b).

11. The method of claim 9 or 10, wherein the pre-programed control valve calibration data is a control valve look-up table.

12. The method of any one of claims 9 to 11, wherein the pre-programed blend valve calibration data is a blend valve look-up table.

13. The method of any one of claims 9 to 12, wherein the HVAC module (200) has no more than one blower assembly configured to induce air to flow through the housing (202) from the air inlet (201) to both the front zone air outlet (230) and the rear zone air outlet (234).

**Patentansprüche**

1. HVAC-Modul (200), umfassend:

ein Gehäuse (202), das einen Lufteinlass (201), einen Frontzonen-Luftauslass (230) und einen Hinterzonen-Luftauslass (234) definiert;
einen Verdampfer (204), der innerhalb des Gehäuses (202) stromabwärts des Lufteinlasses (201) angeordnet ist;
ein Erhitzer (206), der innerhalb des Gehäuses (202) stromabwärts des Verdampfers (204) angeordnet ist;
eine Kaltluftkammer (226) stromabwärts des Verdampfers (204), die in dem Gehäuse (202) zwischen dem Verdampfer (204) und dem Erhitzer (206) definiert ist, wobei die Kaltluftkammer (226) einen ersten Druck ($P_{ev}$) aufweist;
eine Warmluftkammer (228) stromabwärts des Erhitzers (206), die in dem Gehäuse (202) zwischen dem Erhitzer (206) und einer ersten Innenfläche des Gehäuses (202) definiert ist, wobei die Heißluftkammer (228) einen zweiten Druck ($P_{htr}$) aufweist, der quantitativ niedriger ist als der erste Druck ($P_{ev}$) der Kaltluftkammer (226), wobei die Heißluftkammer (228) in Fluidverbindung mit einer durch das Gehäuse (202) definierten Hinterzonen-Mischkammer (216) steht, wobei die Hinterzonen-Mischkammer (216) einen dritten Druck ($P_{mix}$) aufweist und in Fluidverbindung mit dem Hinterzonen-Luftauslass (234) steht;
ein Mischventil (224b), das in der Hinterzonen-Mischkammer (216) angeordnet ist;
einen Kaltluftströmungspfad (286), der durch eine zweite Innenfläche des Gehäuses (202) und eine innere Trennwand in dem Gehäuse (202) definiert ist, wobei sich der Kaltluftströmungspfad (286) von der Kaltluftkammer (226) zu der Hinterzonen-Mischkammer (216) erstreckt; und
ein Steuerventil (290), das im Gehäuse (202) zwischen der Kaltluftkammer (226) und der Hinterzonen-Mischkammer (216) angeordnet ist, wobei das Steuerventil (290) konfiguriert ist, um eine Freisetzung von Kaltluft aus der Kaltluftkammer (226) entlang des Kaltluftströmungspfads (286) in die Hinterzonen-Mischkammer (216) selektiv zu steuern, um den Rückfluss von Kaltluft in die Warmluftkammer (228) zu steuern;
wobei das Mischventil ein Hinterzonen-Mischventil (224b) ist, das an einem Eingang der Hinterzonen-Mischkammer (216) angeordnet ist, wobei das Hinterzonen-Mischventil (224b) konfiguriert ist, um den Luftstrom aus dem Kaltluftstrom und der Heißluftkammer (228) selektiv zum Hinterzonen-Luftauslass (234) zu leiten;
**dadurch gekennzeichnet, dass** das Modul (200) weiterhin eine Steuervorrichtung umfasst, die konfiguriert und/oder programmiert ist, um ein Verfahren zum Steuern eines Rückstroms von Kaltluft in die Heißluftkammer (228) nach einem der Ansprüche 9 bis 13 durchzuführen.

2. HVAC-Modul nach Anspruch 1, wobei das Steuerventil (290) kalte Luft aus der Kaltluftkammer (226) drosselt und dadurch den dritten Druck ($P_{mix}$) der Hinterzonen-Mischkammer (216) so regelt, dass der dritte Druck ($P_{mix}$) quantitativ niedriger bleibt als der zweite Druck ($P_{htr}$) der Warmluftkammer (228).

3. HVAC-Modul nach Anspruch 2, wobei das Steuerventil (290) unabhängig von der Fluidverbindung der Heißluftkammer (228) mit der Hinterzonen-Mischkammer (216) wirkt, so dass das Steuerventil (290) den Querschnitt der Fluidverbindung zwischen der Heißluftkammer (228) und der Hinterzonen-Mischkammer (216) nicht beeinflusst.

4. HVAC-Modul nach einem der Ansprüche 1 bis 3, wobei das im Gehäuse (202) zwischen der Kaltluftkammer (226) und der Hinterzonen-Mischkammer (216) angeordnete Steuerventil (290) eine Drosselklappe ist.

5. HVAC-Modul nach einem der Ansprüche 1 bis 4, wobei das im Gehäuse (202) zwischen der Kaltluftkammer (226) und der Hinterzonen-Mischkammer (216) angeordnete Steuerventil (290) ein Klappventil ist.

6. HVAC-Modul nach einem der Ansprüche 1 bis 5, weiterhin umfassend eine durch das Gehäuse (202) definierte und stromabwärts des Verdampfers (204) neben der Kaltluftkammer (226) und der Heißluftkammer (228) angeordnete Frontzonen-Mischkammer (212), wobei die Frontzonen-Mischkammer (212) in Fluidverbindung mit dem Frontzonen-Luftauslass (230) steht.

**7.** HVAC-Modul nach Anspruch 6, weiterhin umfassend ein Frontzonenmischventil (224a), das in der Frontzonenmischkammer (212) angeordnet ist, wobei das Frontzonenmischventil (224a) konfiguriert ist, um den Luftstrom von der Kaltluftkammer (226) und der Heißluftkammer (228) selektiv zum Frontzonen-Luftauslass (230) zu leiten.

**8.** HVAC-Modul nach einem der Ansprüche 1 bis 7, weiterhin umfassend nicht mehr als eine Gebläseanordnung, die konfiguriert ist, um Luft zum Durchströmen des Gehäuses (202) vom Lufteinlass (201) zu mindestens einem des Frontzonen-Luftauslasses (230) und des Hinterzonen-Luftauslasses (234) zu veranlassen.

**9.** Verfahren zum Steuern eines Rückflusses von Kaltluft in eine Warmluftkammer (228) in einem HVAC-Modul (200) mit offener Architektur, das einen Lufteinlass (201), einen Verdampfer (204) stromabwärts des Lufteinlasses (201), eine Kaltluftkammer (226) stromabwärts des Verdampfers (204), ein Erhitzer (206) stromabwärts der Kaltluftkammer (226), wobei die Warmluftkammer (228) stromabwärts des Erhitzers (206) angeordnet ist, eine Hinterzonen-Mischkammer (216) stromabwärts der Kaltluftkammer (226) und der Warmluftkammer (228), einen Frontzonen-Luftauslass (230), einen Hinterzonen-Luftauslass (234), einen Kaltluftströmungspfad (286) zum Führen von Kaltluft von der Kaltluftkammer (226) zur Hinterzonen-Mischkammer (216), ein Steuerventil (290), das zwischen der Kaltluftkammer (226) und der Hinterzonen-Mischkammer (216) angeordnet ist, und ein in der Hinterzonen-Mischkammer (216) angeordnetes Mischventil (224b) aufweist, wobei das Steuerventil (290) konfiguriert ist, um die Freisetzung von Kaltluft aus der Kaltluftkammer (226) entlang des Kaltluftstrompfads (286) in die Hinterzonen-Mischkammer (216) zu steuern, und wobei das Mischventil ein Hinterzonen-Mischventil (224b) ist, das an einem Eingang der Hinterzonen-Mischkammer (216) angeordnet ist, wobei das Hinterzonen-Mischventil (224b) konfiguriert ist, um den Luftstrom aus dem Kaltluftstrom und der Heißluftkammer (228) selektiv zum Hinterzonen-Luftauslass (234) zu leiten, wobei das Verfahren die Schritte umfasst:

Lesen eines Drucks ($P_{ev}$) der Kaltluftkammer (226), einer Temperatur ($T_c$) der Kaltluftkammer (226), eines Drucks ($P_{htr}$) der Warmluftkammer (228), einer Temperatur ($T_h$) der Warmluftkammer (228) und eines Drucks ($P_{mix}$) der Hinterzonen-Mischkammer (216);
Einstellen eines Austrittsluft-Durchflussmengenziels ($Q_{tot}$) und eines Austrittstemperaturziels ($T_{mix}$) für den Hin-terzonen-Luftauslass (234);
Berechnen eines Widerstands ($R_c$) des Steuerventils (290) nach der folgenden Gleichung:

$$R_c = \left(\frac{T_c - T_h}{T_{mix} - T_h}\right)^2 \frac{P_{ev} - P_{mix}}{Q_{tot}^2}$$

Berechnen eines Widerstands ($R_h$) des Mischventils (224b) nach der folgenden Gleichung:

$$R_h = \left(\frac{T_c - T_h}{T_c - T_{mix}}\right)^2 \frac{P_{htr} - P_{mix}}{Q_{tot}^2}$$

Bestimmen einer Position des Steuerventils (290) entsprechend dem berechneten Widerstand des Steuerventils (290), wobei die Bestimmung auf vorprogrammierten Kalibrierungsdaten des Steuerventils basiert;
Bestimmen einer Position des Mischventils (224b) entsprechend dem berechneten Widerstand des Mischventils (224b), wobei das Bestimmen auf vorprogrammierten Kalibrierungsdaten des Mischventils basiert;
Bewegen des Steuerventils (290) in die Position des Steuerventils (290), die bestimmt ist, um dem berechneten Widerstand des Steuerventils (290) zu entsprechen; und
Bewegen des Mischventils (224b) in die Position des Mischventils (224b), die bestimmt ist, um dem berechneten Widerstand des Mischventils (224b) zu entsprechen.

**10.** Verfahren zum Steuern eines Rückflusses von Kaltluft in eine Warmluftkammer (228) in einem HVAC-Modul (200) mit offener Architektur, das einen Lufteinlass (201), einen Verdampfer (204) stromabwärts des Lufteinlasses (201), eine Kaltluftkammer (226) stromabwärts des Verdampfers (204), ein Erhitzer (206) stromabwärts der Kaltluftkammer (226), wobei die Warmluftkammer (228) stromabwärts des Erhitzers (206) angeordnet ist, eine Hinterzonen-Mischkammer (216) stromabwärts der Kaltluftkammer (226) und der Warmluftkammer (228), einen Frontzonen-Luftauslass (230), einen Hinterzonen-Luftauslass (234), einen Kaltluftströmungspfad (286) zum Führen von Kaltluft von der Kaltluftkammer (226) zur Hinterzonen-Mischkammer (216), ein Steuerventil (290), das zwischen der Kaltluftkammer (226) und der Hinterzonen-Mischkammer (216) angeordnet ist, und ein in der Hinterzonen-Mischkammer (216) angeordnetes Mischventil (224b) aufweist, wobei das Steuerventil (290) konfiguriert ist, um die Freisetzung von Kaltluft aus der Kaltluftkammer (226) entlang des Kaltluftströmungspfads (286) in die Hinterzonen-Mischkammer (216) zu steuern, und wobei das Mischventil ein Hinterzonen-Mischventil (224b) ist, das an einem Eingang der Hinterzonen-Mischkammer (216) angeordnet ist, wobei das Hinterzonen-Mischventil (224b) konfiguriert ist, um den Luftstrom aus dem Kaltluftstrom und der Heißluftkammer (228) selektiv zum Hinterzonen-Luftauslass (234) zu leiten, wobei das Verfahren die Schritte umfasst:

Lesen der Position des Steuerventils (290) und der Position des Mischventils (224b),
Bestimmen des Widerstandes ($R_c$) des Steuerventils (290) basierend auf vorprogrammierten Kalibrierungsdaten des Steuerventils, die aus vorkalibrierten Tabellen entnommen werden,
Bestimmen des Widerstands ($R_h$) des Hinterzonen-Mischventils (224b) basierend auf vorprogrammierten Kalibrierungsdaten des Mischventils, die aus vorkalibrierten Tabellen entnommen werden,
Berechnen einer Austrittsluft-Durchflussmenge ($Q_{out}$) am Hinterzonen-Luftauslass (234) nach der folgenden Gleichung:

$$Q_{out} = \left(\frac{P_{htr} - P_{mix}}{R_h}\right)^{\frac{1}{2}} + \left(\frac{P_{ev} - P_{mix}}{R_c}\right)^{\frac{1}{2}}$$

Berechnen einer Austrittstemperatur ($T_{out}$) am Hinterzonen-Luftauslass (234) nach der folgenden Gleichung:

$$T_{out} = \left(\frac{P_{ev} - P_c}{R_c}\right)^{\frac{1}{2}} \frac{T_c}{Q_{out}} + \left(\frac{P_{htr} - P_c}{R_h}\right)^{\frac{1}{2}} \frac{T_h}{Q_{out}}$$

Vergleichen der berechneten Austrittsluft-Durchflussmenge ($Q_{out}$) und der Austrittstemperatur ($T_{out}$) mit einem voreingestellten Austrittsluft-Durchflussmengenziel ($Q_{tot}$) und einem voreingestellten Austrittstemperaturziels ($T_{mix}$), und Bewegen mindestens eines der Steuerventile (290) und des Hinterzonen-Mischventils (224b).

**11.** Verfahren nach Anspruch 9 oder 10, wobei die vorprogrammierten Kalibrierungsdaten des Regelventils eine Regelventil-Nachschlagetabelle sind.

**12.** Verfahren nach einem der Ansprüche 9 bis 11, wobei die vorprogrammierten Kalibrierungsdaten des Mischventils eine Mischventil-Nachschlagetabelle sind.

**13.** Verfahren nach einem der Ansprüche 9 bis 12, wobei das HVAC-Modul (200) nicht mehr als eine Gebläseanordnung aufweist, die konfiguriert ist, um Luft zum Durchströmen des Gehäuses (202) vom Lufteinlass (201) zum Frontzonen-Luftauslass (230) und zum Hinterzonen-Luftauslass (234) zu veranlassen.

## Revendications

**1.** Module HVAC (200) comprenant :

un boîtier (202) définissant une entrée d'air (201), une sortie d'air de zone avant (230), et une sortie d'air de zone arrière (234) ;
un évaporateur (204) disposé dans le boîtier (202) en aval de l'entrée d'air (201) ;
un dispositif de chauffage (206) disposé dans le boîtier (202) en aval de l'évaporateur (204) ;
une chambre d'air froid (226) en aval de l'évaporateur (204) définie dans le boîtier (202) entre l'évaporateur (204) et le dispositif de chauffage (206), la chambre d'air froid (226) ayant une première pression ($P_{ev}$) ;
une chambre d'air chaud (228) en aval du dispositif de chauffage (206) définie dans le boîtier (202) entre le dispositif de chauffage (206) et une première surface intérieure du boîtier (202), la chambre d'air chaud (228) ayant une deuxième pression ($P_{htr}$) quantitativement inférieure à la première pression ($P_{ev}$) de la chambre d'air froid (226), la chambre d'air chaud (228) étant en communication fluidique avec une chambre de mélange de zone arrière (216) définie par le boîtier (202), la chambre de mélange de zone arrière (216) ayant une troisième pression ($P_{mix}$) et étant en communication fluidique avec la sortie d'air de zone arrière (234) ;
une vanne de mixage (224b) disposée dans la chambre de mélange de zone arrière (216) ;

un trajet de flux d'air froid (286) défini par une seconde surface intérieure du boîtier (202) et une cloison intérieure dans le boîtier (202), le trajet de flux d'air froid (286) s'étendant de la chambre d'air froid (226) à la chambre de mélange de zone arrière (216) ; et

une vanne de commande (290) disposée dans le boîtier (202) entre la chambre d'air froid (226) et la chambre de mélange de zone arrière (216), la vanne de commande (290) étant configurée pour commander sélectivement une libération d'air froid depuis la chambre d'air froid (226) le long du trajet de flux d'air froid (286) dans la chambre de mélange de zone arrière (216) de manière à commander un refoulement d'air froid dans la chambre d'air chaud (228) ;

dans lequel la vanne de mixage est une vanne de mixage de zone arrière (224b) disposée à une entrée de la chambre de mélange de zone arrière (216), la vanne de mixage de zone arrière (224b) étant configurée pour diriger de manière sélective un flux d'air provenant du flux d'air froid et de la chambre d'air chaud (228) vers la sortie d'air de zone arrière (234) ;

**caractérisé en ce que**

le module (200) comprend en outre un dispositif de commande configuré et/ou programmé pour effectuer un procédé de commande d'un refoulement d'air froid dans la chambre d'air chaud (228) selon l'une quelconque des revendications 9 à 13.

2. Module HVAC selon la revendication 1, dans lequel la vanne de commande (290) étrangle de l'air froid provenant de la chambre d'air froid (226), régulant ainsi la troisième pression ($P_{mix}$) de la chambre de mélange de zone arrière (216), de sorte que la troisième pression ($P_{mix}$) reste quantitativement inférieure à la deuxième pression ($P_{htr}$) de la chambre d'air chaud (228).

3. Module HVAC selon la revendication 2, dans lequel la vanne de commande (290) agit indépendamment de la communication fluidique de la chambre d'air chaud (228) à la chambre de mélange de zone arrière (216), de telle sorte que la vanne de commande (290) n'affecte pas la section transversale de la communication fluidique entre la chambre d'air chaud (228) et la chambre de mélange de zone arrière (216).

4. Module HVAC selon l'une quelconque des revendications 1 à 3, dans lequel la vanne de commande (290) disposée dans le boîtier (202) entre la chambre d'air froid (226) et la chambre de mélange de zone arrière (216) est une vanne papillon.

5. Module HVAC selon l'une quelconque des revendications 1 à 4, dans lequel la vanne de commande (290) disposée dans le boîtier (202) entre la chambre d'air froid (226) et la chambre de mélange de zone arrière (216) est une vanne à clapet.

6. Module HVAC selon l'une quelconque des revendications 1 à 5, comprenant en outre une chambre de mélange de zone avant (212) définie par le boîtier (202) et positionnée en aval de l'évaporateur (204) à proximité adjacente de la chambre d'air froid (226) et de la chambre d'air chaud (228), la chambre de mélange de zone avant (212) étant en communication fluidique avec la sortie d'air de zone avant (230).

7. Module HVAC selon la revendication 6, comprenant en outre une vanne de mixage de zone avant (224a) disposée dans la chambre de mélange de zone avant (212), dans lequel la vanne de mixage de zone avant (224a) est configurée pour diriger de manière sélective un flux d'air provenant de la chambre d'air froid (226) et de la chambre d'air chaud (228) vers la sortie d'air de zone avant (230).

8. Module HVAC selon l'une quelconque des revendications 1 à 7, comprenant en outre pas plus d'un ensemble de soufflage configuré pour amener de l'air à circuler à travers le boîtier (202) depuis l'entrée d'air (201) vers au moins l'une parmi la sortie d'air de zone avant (230) et la sortie d'air de zone arrière (234).

9. Procédé de commande d'un refoulement d'air froid dans une chambre d'air chaud (228) dans un module HVAC à architecture ouverte (200) ayant une entrée d'air (201), un évaporateur (204) en aval de l'entrée d'air (201), une chambre d'air froid (226) en aval de l'évaporateur (204), un dispositif de chauffage (206) en aval de la chambre d'air froid (226), ladite chambre d'air chaud (228) en aval du dispositif de chauffage (206), une chambre de mélange de zone arrière (216) en aval de la chambre d'air froid (226) et de la chambre d'air chaud (228), une sortie d'air de zone avant (230), une sortie d'air de zone arrière (234), un trajet de flux d'air froid (286) pour guider de l'air froid de la chambre d'air froid (226) vers la chambre de mélange de zone arrière (216), une vanne de commande (290) disposée entre la chambre d'air froid (226) et la chambre de mélange de zone arrière (216), et une vanne de mixage (224b) disposée dans la chambre de mélange de zone arrière (216), dans lequel ladite vanne de commande (290) est configurée pour commander la libération d'air froid depuis la chambre d'air froid (226) le long du trajet de flux d'air froid (286) dans la chambre de mélange arrière (216), et dans lequel ladite vanne de mixage est une vanne de mixage de zone arrière (224b) disposée à une entrée de la chambre de mélange de zone arrière (216), dans lequel la vanne de mixage de zone arrière (224b) est configurée pour diriger sélectivement un flux d'air provenant du flux d'air froid et de la chambre d'air chaud (228) vers la sortie d'air de zone arrière (234), le procédé comprenant les étapes consistant à :

lire une pression ($P_{ev}$) de la chambre d'air froid (226), une température ($T_c$) de la chambre d'air froid (226), une pression ($P_{htr}$) de la chambre d'air chaud (228), une température ($T_h$) de la chambre d'air chaud (228), et pression ($P_{mix}$) de la chambre de mélange de zone arrière (216) ;
établir une cible de débit d'air de décharge ($Q_{tot}$) et une cible de température de décharge ($T_{mix}$) pour la sortie d'air de zone arrière (234) ;
calculer une résistance ($R_c$) de la vanne de commande (290) selon l'équation suivante :

$$R_c = \left(\frac{T_c - T_h}{T_{mix} - T_h}\right)^2 \frac{P_{ev} - P_{mix}}{Q_{tot}^2}$$

calculer une résistance ($R_h$) de la vanne de mixage (224b) selon l'équation suivante :

$$R_h = \left(\frac{T_c - T_h}{T_c - T_{mix}}\right)^2 \frac{P_{htr} - P_{mix}}{Q_{tot}^2}$$

déterminer une position de la vanne de commande (290) correspondant à la résistance calculée de la vanne de commande (290), la détermination étant basée sur des données d'étalonnage préprogrammées de vanne de commande ;
déterminer une position de la vanne de mixage (224b) correspondant à la résistance calculée de la vanne de mixage (224b), la détermination étant basée sur des données d'étalonnage préprogrammées de vanne de mixage ;
déplacer la vanne de commande (290) jusqu'à la position de la vanne de commande (290) déterminée pour correspondre à la résistance de la vanne de commande (290) calculée ; et
déplacer la vanne de mixage (224b) jusqu'à la position de la vanne de mixage (224b) déterminée pour correspondre à la résistance de la vanne de mixage (224b) calculée.

10. Procédé de commande d'un refoulement d'air froid dans une chambre d'air chaud (228) dans un module HVAC à architecture ouverte (200) ayant une entrée d'air (201), un évaporateur (204) en aval de l'entrée d'air (201), une chambre d'air froid (226) en aval de l'évaporateur (204), un dispositif de chauffage (206) en aval de la chambre d'air froid (226), ladite chambre d'air chaud (228) en aval du dispositif de chauffage (206), une chambre de mélange de zone arrière (216) en aval de la chambre d'air froid (226) et de la chambre d'air chaud (228), une sortie d'air de zone avant (230), une sortie d'air de zone arrière (234), un trajet de flux d'air froid (286) pour guider de l'air froid de la chambre d'air froid (226) vers la chambre de mélange de zone arrière (216), une vanne de commande (290) disposée entre la chambre d'air froid (226) et la chambre de mélange de zone arrière (216), et une vanne de mixage (224b) disposée dans la chambre de mélange de zone arrière (216), dans lequel ladite vanne de commande (290) est configurée pour commander la libération d'air froid depuis la chambre d'air froid (226) le long du trajet de flux d'air froid (286) dans la chambre de mélange arrière (216), et dans lequel ladite vanne de mixage est une vanne de mixage de zone arrière (224b) disposée à une entrée de la chambre de mélange de zone arrière (216), dans lequel la vanne de mixage de zone arrière (224b) est configurée pour diriger sélectivement un flux d'air provenant du flux d'air froid et de la chambre d'air chaud (228) vers la sortie d'air de zone arrière (234), le procédé comprenant les étapes consistant à :

lire la position de la vanne de commande (290), et la position de la vanne de mixage (224b),
déterminer la résistance ($R_c$) de la vanne de commande (290) sur la base de données d'étalonnage préprogrammées de vanne de commande qui sont consultées auprès de tables pré-étalonnées,
déterminer la résistance ($R_h$) de la vanne de mixage de zone arrière (224b) sur la base de données d'étalonnage préprogrammées de vanne de mixage qui sont consultées à auprès de tables pré-étalonnées,

calculer un débit d'air de décharge ($Q_{out}$) au niveau de la sortie d'air de zone arrière (234) selon l'équation suivante :

$$Q_{out}=\left(\frac{P_{htr}-P_{mix}}{R_h}\right)^{\frac{1}{2}}+\left(\frac{P_{ev}-P_{mix}}{R_c}\right)^{\frac{1}{2}}$$

calculer une température de décharge ($T_{out}$) au niveau de la sortie d'air de zone arrière (234) selon l'équation suivante :

$$T_{out}=\left(\frac{P_{ev}-P_c}{R_c}\right)^{\frac{1}{2}}\frac{T_c}{Q_{out}}+\left(\frac{P_{htr}-P_c}{R_h}\right)^{\frac{1}{2}}\frac{T_h}{Q_{out}}$$

comparer le débit d'air de décharge calculé ($Q_{out}$) et la température de décharge ($T_{out}$) à une cible de débit d'air de décharge préétablie ($Q_{tot}$) et à une cible de température de décharge préétablie ($T_{mix}$), et déplacer au moins l'une parmi la vanne de commande (290) et la vanne de mixage de zone arrière (224b).

11. Procédé selon la revendication 9 ou 10, dans lequel les données d'étalonnage préprogrammées de vanne de commande sont une table de consultation de vanne de commande.

12. Procédé selon l'une quelconque des revendications 9 à 11, dans lequel les données d'étalonnage préprogrammées de vanne de mixage sont une table de consultation de vanne de mixage.

13. Procédé selon l'une quelconque des revendications 9 à 12, dans lequel le module HVAC (200) ne comporte pas plus d'un ensemble de soufflage configuré pour amener de l'air à circuler à travers le boîtier (202) depuis l'entrée d'air (201) vers à la fois la sortie d'air de zone avant (230) et la sortie d'air de zone arrière (234).

FIG. 1

300

Enter

310 — Read $P_{ev}$, $T_c$, $P_{htr}$, $T_h$, $P_{mix}$

320 — Set Discharge Air Flow Rate Target $Q_{tot}$ and Temp Target $T_{mix}$

330 — Calculate Anti-Backflow Valve Resistance

$$R_c = \left( \frac{T_c - T_h}{T_{mix} - T_h} \right)^2 \frac{(P_{ev} - P_{mix})}{Q_{tot}^2}$$

340 — Calculate Hot Stream Valve Resistance

$$R_h = \left( \frac{T_c - T_h}{T_c - T_{mix}} \right)^2 \frac{P_{htr} - P_{mix}}{Q_{tot}^2}$$

350 — Loop Up Anti-Backflow Vavle Position

$$POS_c = Lookup(AntiBackflowValveResistMap, R_c)$$

360 — Loop Up Hot Stream Valve Position

$$POS_h = Lookup(HotValveResistMap, R_h)$$

370 — Move Anti-Backflow Vavle to $POS_c$

380 — Move HotControl Vavle to $POS_h$

Exit

## FIG. 2

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1466764 A1
- DE 112014000301 T5
- EP 2030816 A2
- WO 2017009055 A1
- WO 2017001215 A1